# EUROPEAN PATENT APPLICATION

(11) **EP 4 386 685 A1**
(43) Date of publication of application: **19.06.2024**
(21) Application number: 23207170.4
(22) Date of filing: 31.10.2023
(51) Int. Cl.: G06T 17/05, G06T 15/10, G06T 17/20, G06T 19/00

(54) **METHOD FOR 3D VISUALIZATION OF SENSOR DATA**

(30) Priority: 13.12.2022 EP 22213249
(71) Applicant: My Virtual Reality Software AS, 0152 Oslo (NO)
(72) Inventor: LØVLI, Viggo, 3616 Kongsberg (NO); BØE SKATTUM, Sigve, 1362 Hosle (NO)
(74) Representative: Kaminski Harmann

(57) **Abstract**

The invention pertains to a computer-implemented method (100) for visualizing sensor data in a three-dimensional virtual representation of a terrain that has multiple surface layers, the method comprising, in a computing device, receiving (110) terrain data comprising information about the multiple surface layers, receiving (120) at least one point cloud comprising a multitude of data points, each data point comprising three-dimensional coordinates in relation to the terrain and one or more sensor data values, performing a pre-processing procedure (140) and visualizing (180) the sensor data in at least a part of the virtual representation of the terrain, wherein the pre-processing procedure comprises generating a three-dimensional mesh as the virtual representation based on the terrain data, dividing the mesh into a multitude of tiles, each tile having at least three corners, each of the corners being shared with one or more neighbour tiles, calculating a projection direction for each tile corner, and calculating a projection direction for each tile based on the projection directions of the tile's corners, wherein visualizing the sensor data comprises, for each tile in the part of the virtual representation of the terrain, projecting a visual attribute into the tile using the projection direction of the tile and a projection volume of the data point, the visual attribute representing a sensor data value of a data point; and displaying the tile with the projected visual attribute.

## Description

The present invention pertains to the field of three-dimensional (3D) computer graphics and more particularly to an improved computer-implemented method and computer system for visualizing sensor data in a 3D virtual representation. For instance, the invention enables large amounts of measured or scanned terrain surface data to be displayed on the surfaces of a 3D virtual representation of the real terrain.

Two-dimensional (2D) virtual world representations can be tiled into a square-pattern where each tile is small enough to represent one data-point. This 2D terrain deviates from the real world because it lacks elevation and multiple layers of terrain surfaces which one can find inside a cave or under a cliff overhang. The accuracy of the data displayed will therefore be of accordingly reduced quality. Two-and-a-half-dimensional (2.5D) virtual world representations are in most cases the same as 2D representations except for elevation values being the additional half dimension. This 2.5D terrain will deviate less from the real world as it has a topography represented through elevation data in the terrain. It does however still only represent one layer of terrain. In contrast to 2D and 2.5D solutions, 3D virtual world representations can have multiple layers of terrain and are thus capable of modelling complex 3D structures such as caves and cliff overhangs.

For instance, a method of encoding localized terrain modifications into (single-layered) heightmaps is disclosed in US 11,232,630 B2. The 2D and 2.5D representations have a limitation which can be exploited when displaying data on their surfaces. The fact that these representations have only one layer of terrain means that all data to be displayed on the surface can be projected directly from above and down onto the surface. This means that the data-tiles in a 2D representation can hold a uniform size and seemingly hold high visual quality despite the lack of elevation. The data-tiles in a virtual terrain with elevation can in the simplest form be projected from above and form squares on the virtual terrain which stretches in a direction where the terrain has elevation-slopes. How much the tiles stretch can be reduced by having a non-uniform tile size, and by deviating from square shape of tiles. These non-uniform tiles can still be projected from above. Projection from above is also simplified mathematically because the distance of projection in both up and down directions can be infinite (which mathematically is simpler to model than a distance-constrained space). The 3D solution cannot use the same exploit as the other solutions because the virtual terrain can hold multiple layers of terrain. A projection directly from above would show the same data on all terrain-layers that would be intersected.

It would therefore be desirable to have a simple solution for projecting data points onto a 3D virtual world representation, in particular a solution that works on handheld computing devices that have limited memory and computing capacities.

It is therefore an object of the present invention to provide an improved method for efficient visualization of sensor data in a 3D model of the surrounding in which the sensor data has been captured.

It is another object to provide such a method that can be performed on a wide variety of hardware, including personal computers, mobile devices and low-end computers.

It is another object, to provide such a method that reduces the time for rendering and allows for a higher framerate when the data is visualized sequentially from different viewpoints.

It is another object, to provide such a method that reduces the needed computing capacity and power consumption on the rendering device.

It is another object of the invention to provide a computer system and a computer programme product for executing said method.

At least one of these objects is achieved by the method according to claim 1, the computer system according to claim 13 and/or the dependent claims of the present invention.

A first aspect of the invention pertains to a computer-implemented method for visualizing sensor data in a three-dimensional (3D) virtual representation of a terrain that has multiple surface layers. The method comprises, in a computer system,
- receiving terrain data comprising information about the multiple surface layers;
- receiving at least one point cloud comprising a multitude of data points, each data point comprising 3D coordinates in relation to the terrain and one or more sensor data values;
- performing a pre-processing procedure; and
- visualizing the sensor data in at least a part of the virtual representation of the terrain.

According to this aspect of the invention, the pre-processing procedure comprises
- generating a 3D mesh as the virtual representation based on the terrain data;
- dividing the mesh into a multitude of tiles, each tile having at least three corners, each of the corners being shared with one or more neighbour tiles;
- assigning a 3D projection volume to each data point;
- calculating a projection direction for each tile corner; and
- calculating a projection direction for each tile based on the projection directions of the tile's corners.

According to this aspect of the invention, visualizing the sensor data comprises projecting a visual attribute representing a sensor data value of one of the data points into the tile, and displaying the tile having the projected visual attribute. The projection direction of the tile and a 3D projection volume of the respective data point are used for projecting the visual attribute into the tile.

According to some embodiments, the method comprises assigning a 3D projection volume to each data point. For instance, the projection volumes may be assigned so that
- each projection volume has a same size and shape (e.g., spherical or cubical);
- neighbouring projection volumes overlap; and/or
- the mesh intersects each projection volume, particularly at or near a centre of the respective projection volume.

According to some embodiments, one or more visual attributes are assigned to each projection volume, each visual attribute representing a sensor data value of the respective data point.

According to some embodiments, projecting the visual attribute into the tile comprises projecting at least one of the one or more visual attributes that are assigned to that projection volume (or to its data point), which is positioned in the projection direction of the tile, or which is positioned most closely to the projection direction of the tile.

According to some embodiments, the method comprises an area-selection procedure for selecting the part of the virtual representation of the terrain in which the sensor data is to be visualized, said area-selection procedure comprising receiving a user selection of an area of the mesh, projecting the selected area on the mesh, calculating a 3D selection volume based on the projection of the area, and determining, which tiles are located in the selection volume. Visualizing the sensor data is then performed for each tile that is located in the selection volume.

According to some embodiments of the method, generating the mesh comprises generating a mesh in multiple levels of detail, dividing the mesh into tiles comprises dividing the mesh differently in each level of detail, and the method comprises receiving a user selection of a level of detail. In some embodiments, the higher the level of detail, the higher is the number of tiles into which the mesh is divided. In some embodiments, the number of data points exceeds the number of tiles in each level of detail. In some embodiments, the user selection of a level of detail comprises a selection of a zoom level.

According to some embodiments of the method, the at least one point cloud comprises data points comprising sensor data values generated by a plurality of different sensor kinds, the method comprises receiving a user selection of a sensor kind, and the tile is displayed according to a sensor data value of the projected data point generated by the selected sensor kind. In some embodiments, at least a subset of data point comprises sensor data values of a plurality of different sensor kinds. In some embodiments, the different sensor kinds measure different spectrums of real surfaces in the terrain.

According to some embodiments of the method, the data points comprise a significance value, and projecting the visual attribute is based on the significance value. In some embodiments, the significance value determines a visibility level of the projected visual attribute. In some embodiments, the significance value is dependent on a quality or reliability of the sensor data value.

According to some embodiments of the method, the data points comprise sensor data values generated by multiple real-world sensors in the terrain. In some embodiments, the multiple real-world sensors comprise a grid of radar sensors. In some embodiments, the method comprises capturing the at least one point cloud using the multiple real-world sensors. In some embodiments, the at least one point cloud comprises at least five million data points, e.g., at least twenty million data points.

According to some embodiments of the method, the visual attribute comprises a true colour of the surface. According to other embodiments of the method, the visual attribute comprises a false colour representing a data value.

According to some embodiments of the method, the three-dimensional selection volume extends above and below the projection of the area on the mesh. For instance, tiles on at least two surface layers are positioned in the selection volume.

According to some embodiments of the method, the mesh is divided into tiles so that the tiles do not overlap. In some embodiments, the tiles comprise triangles and rectangles, e.g. squares. In other embodiments, the tiles are cells of a Voronoi diagram.

According to some embodiments of the method, the mesh is composed of a plurality of triangles, and at least a subset of tiles covers at least two of the triangles at least partially.

According to some embodiments of the method, the multiple surface layers have multiple surface points at identical horizontal coordinates.

According to some embodiments of the method, the multiple surface layers are effected by natural or man-made structures in the terrain. For instance, the structures may comprise at least one of caves, tunnels, overhangs and buildings.

According to some embodiments, the method is performed in real time by a handheld computing device, the sensor data being visualized on a display of the handheld computing device. For instance, the handheld computing device may be a smartphone or tablet computer, and the display may be touchscreen.

A second aspect of the invention pertains to a computer system comprising a data storage, a graphics processing unit (GPU), input means and a display, wherein the computer system is configured for performing the method according to the first aspect.

According to some embodiments, the computer system is embodied as a handheld computing device having a touchscreen, the sensor data being visualized on the touchscreen. For instance, the handheld computing device may be a smartphone or a tablet computer.

A third aspect of the invention pertains to a computer program product comprising program code, which is stored on a machine-readable medium, or being embodied by an electromagnetic wave comprising a program code segment, and having computer-executable instructions for performing - e.g. when run on a computer system according to the second aspect - the method according to the first aspect.

The invention in the following will be described in detail by referring to exemplary embodiments that are accompanied by figures, in which:
- Fig. 1: shows a three-dimensional representation of an exemplary terrain;
- Figs. 2a-c: show exemplary divisions of a mesh into tiles;
- Figs. 3a-c: show flow charts illustrating a first exemplary embodiment of a computer-implemented method according to the invention;
- Fig. 4: shows a flow chart illustrating a second exemplary embodiment of a computer-implemented method according to the invention;
- Figs. 5a-c: illustrate visualizing tiles in a user-selected area;
- Figs. 6a-b: illustrate the creation of a 3D volume around the user-selected area; and
- Fig. 7: shows an exemplary embodiment of a computer system according to the invention.

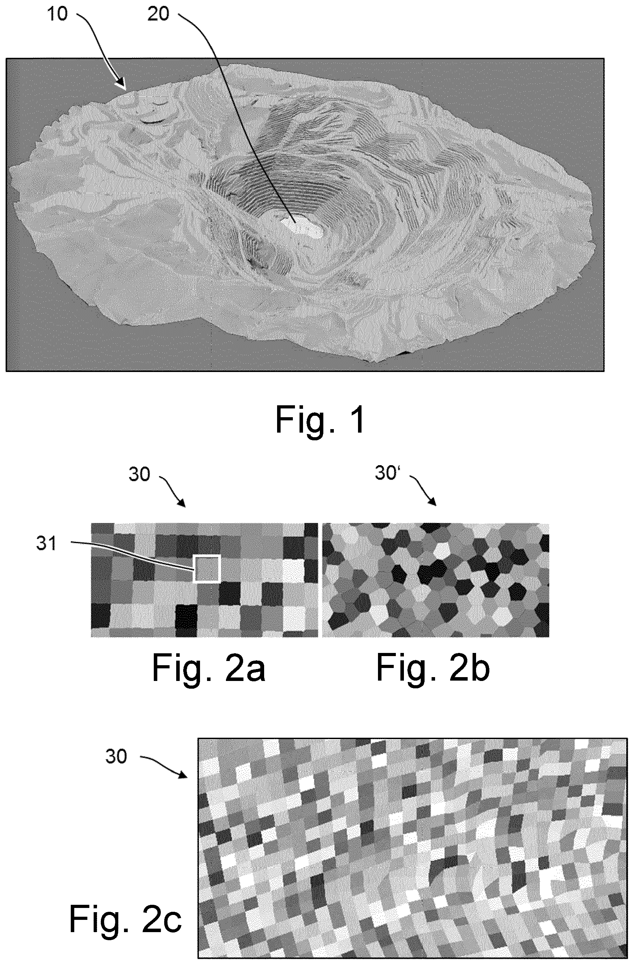

Figure 1 shows a three-dimensional (3D) mesh 10 as an example of a 3D representation of an exemplary terrain. The shown terrain comprises a large crater of a surface mine. A multitude of sensors (not shown here) that gather data related to the terrain and its surfaces are provided in the real-world terrain. For instance, these sensors may comprise a grid of radar sensors that monitor the complete terrain or large areas thereof over time. There may be many millions of data points, each comprising one or more radar source values. In many applications it is required to display the gathered real-world data in a representation of the real-world terrain, for instance to allow an operator to analyse the data with respect to the terrain.

Due to several 3D features, such as caves, tunnels and overhangs, the shown terrain - at least in some areas - comprises multiple surface layers where surface points may have identical horizontal coordinates but different vertical coordinates. It is thus not possible to properly represent such a terrain including all of its features in 2D or 2.5D. It is therefore necessary to visualize the sensor data in a 3D representation of the terrain.

As depicted here, such a 3D representation may be a 3D mesh 10 composed of a multitude of triangles that ascertain the surfaces of the real-world terrain. Optionally, a plurality of such meshes of the same terrain may be provided in different levels of detail (LODs). For instance, the number of LODs (and, thus, meshes) may depend on the size of the representation, the desired resolution and the available hardware.

The present invention allows gathering data from many real-world sensors, select the highest quality data from the different sensors, and display all the data. In order to do so, according to the present invention, data-points are projected onto the mesh 10 from the best possible direction for each data-point. The best possible direction is found by splitting the entire virtual world representation model, i.e. the mesh 10, into a multitude of tiles.

Figures 2a-c show exemplary divisions 30, 30' into tiles 31. The division 30 of Figure 2a comprises a multitude of squares, whereas the division 30' of Figure 2b comprises tiles that are cells of a Voronoi diagram. Figure 2c shows a division 30 that comprises a combination of squares and triangles already applied to a 3D mesh representing the terrain surface. The shape of each projected data point is defined through a pre-processing step in order to represent a square or a triangle depending on the layout of the virtual world representation. Some tiles 31 may cover more than one triangle of the mesh. The shapes are fitted tightly together to avoid gaps between them in the runtime visualization. In the black- and-white depiction of Figures 2a-c, random brightness values are assigned to the tiles for illustration purposes. Actual applications may assign colours instead.

Independent of the shape of the tiles, each tile 31 has at least three corners that are shared with its neighbour tiles. For each such corner a common direction of projection is calculated. The direction of projection shall always be directly outward from the terrain surface, i.e. the mesh, at the respective corner's position.

A data point is projected inside the area of a tile shape, and it is projected in a direction calculated from all the corners. The resulting direction is an interpolation of the plurality of directions of the tile's corners, for instance based on how close the current part (fragment) of the tile is to each corner.

Each tile must also avoid to be projected too far, in order to avoid display of the data point on multiple layers of terrain. Therefore, each tile has a limit on how far it can be projected. The data point can however be projected in both the direction of the projection calculated from the corners, or in the opposite direction because the tile's surface can be above the virtual terrain, i.e. the mesh, or below it. This means that each data point is represented with a tile shape where each corner has a projection-direction and a defined volume it can extend into.

A 3D volume is assigned to each data point as a projection volume, the projection volume surrounding the data point. That means that each data point is set up to occupy such a projection volume in the virtual space where colours representing the data are projected like sharp-edged sources of light onto the virtual world representation. In particular, a size and shape of all projection volumes may be the same. For instance, the projection volumes may be spherical or cubical. The virtual world is supported fully in three dimensions, and the data support projection in any direction.

According to exemplary embodiments of a method according to the invention, visual attributes such as colours, shades and/or brightness values may be assigned to each tile, each attribute being assigned according to a value of a projected data-point.

A size of the tiles relative to the mesh may depend on a current level of detail. The size in an actual visualization additionally depends on a distance from the visual camera - which preferably may be moved freely around the representation of the terrain.

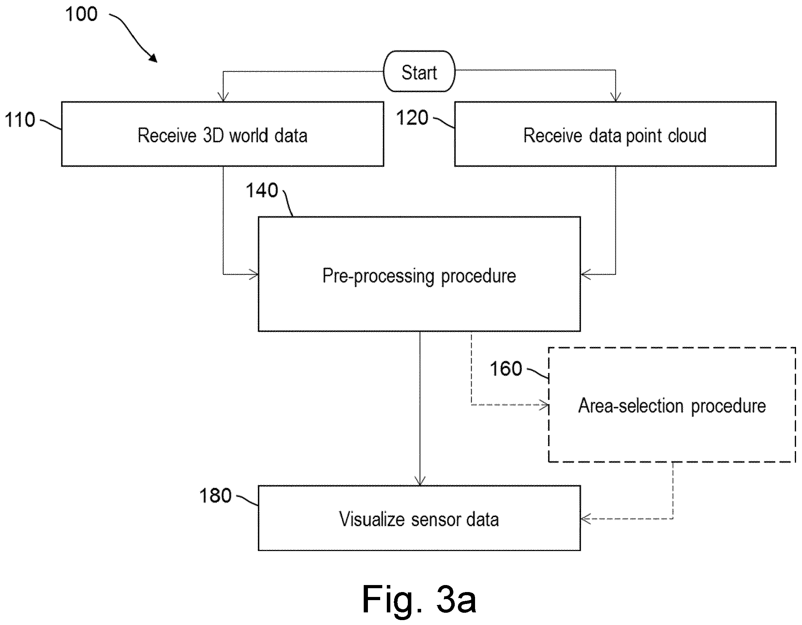

Figures 3a-c show flow charts illustrating exemplary embodiments of a method 100 according to the invention, i.e. a computer-implemented method for visualizing sensor data in a 3D virtual representation of a terrain that has multiple surface layers. As shown in Figure 3a, the method 100 starts with receiving 3D world data related to a real-world terrain (step 110) and with receiving a data point cloud comprising real-world sensor data (step 120). The terrain data comprises information about the multiple surface layers of the 3D terrain. Each data point comprises 3D coordinates in relation to the terrain and one or more sensor data values. These values are to be visualized 180 in at least a part of the virtual representation of the terrain and at their correct position within the 3D terrain. To make this possible, the shown method comprises a pre-processing procedure 140. Optionally, the method further comprises an area-selection procedure 160 to determine the part of the virtual representation in which the sensor data is to be visualized. This is especially useful for very large terrains with very large datasets to be visualized on handheld devices having limited computing and data storage capacity.

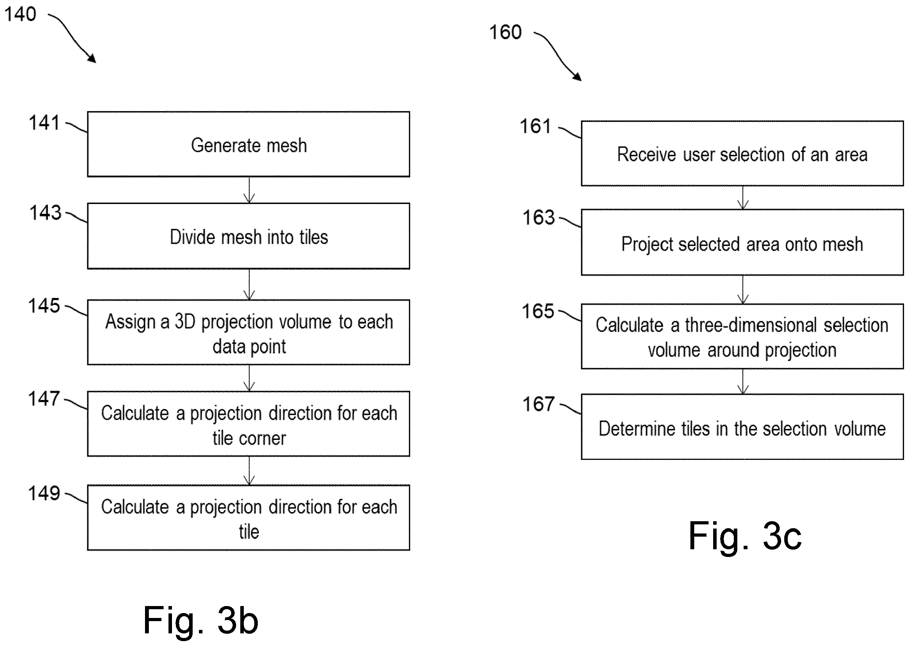

The pre-processing process 140 is illustrated in Figure 3b. Based on the received 3D world data, a 3D mesh is generated 141 - optionally, meshes in a multitude of different levels of detail (LOD) can be generated. Whether or not it is necessary to generate the virtual world representation mesh in multiple LOD, depends on the complexity of the mesh itself. For instance, the complexity of the mesh needs to be reduced only if the rasterizer hardware needs it in order to keep the performance high. The mesh - or each of the meshes - is divided 143 into a multitude of tiles (e.g., as described with respect to Figures 2a-c).

To each of the received data points of the data point cloud, a 3D volume (projection volume) is assigned 145. Each of these projection volumes thus encloses its respective data point, in particular so that each projection volume intersects with the mesh - preferably near a centre point of the projection volume. These volumes may overlap. This means that each projection volume, i.e., each volume a data point occupies, can be partly shared with one or more neighbour data points. This is different from the tile shapes, which preferably should not overlap. To each projection volume one or more visual attributes are assigned that are to be applied to the mesh. The visual attributes depend on values of the data-points, i.e., sensor values captured by the real-world sensors. The visual attributes for instance may comprise colours, shading, brightness values etc. For example, sensors might detect the presence of water, and the visual attributes applied to the mesh may comprise a blue colour for flooded areas.

Note that the data-point shapes can be generated in multiple levels of detail independently of the detail levels of the virtual world.

Each tile comprises three or more corners that are shared with neighbour tiles. The number of corners usually exceeds the numbers of tiles. For each of the multitude of corners, a projection direction is calculated 147. Each corner of a tile can project into different directions. Since all corners are shared by neighbour tiles, the projection direction of the shared corner is also shared by the neighbour tiles. Data points populated onto the tiles should adopt the shapes of the tiles, e.g., square or triangular shapes. Data points should be at the centre of the shape, and the corners of neighbour shapes must share positions.

In other words, the pre-processing procedure 140 comprises:
- generating 141 a 3D mesh based on the terrain data;
- dividing 143 the 3D mesh into a multitude of tiles;
- assigning 145 a 3D projection volume to each data point;
- calculating 147 a projection direction for each tile corner; and
- calculating 149 a projection direction for each tile based on the projection directions of the corners of the respective tile.

After the pre-processing procedure 140 has been finished, sensor data may be visualized 180. This visualization may include visualizing either each tile of the mesh, or only those tiles that lie in a certain (e.g., user-selected) part of the virtual representation of the terrain. Visualizing the sensor data comprises projecting a visual attribute into each of the involved tiles using the projection direction of the tile and the projection volume of the data point, the visual attribute representing a sensor data value of a data point. The tile can then be displayed having the projected visual attribute.

Optionally, the user may start an area-selection procedure 160 for selecting a part of the virtual representation of the terrain in which the sensor data is to be visualized. This procedure 160 is illustrated in Figure 3b and starts with the system receiving 161 a selection of an area of the mesh. The selected area is then projected 163 on the mesh. Based on the projection of the area on the mesh, a 3D volume (selection volume) is calculated 165, and a subset of tiles of the multitude of tiles is determined 167, which subset of tiles are located within this volume. The sensor data may then be visualized 180 only in these tiles. Since the virtual representation of the terrain is three-dimensional, the subset may include tiles on other surfaces than a surface selected by the user, e.g., tiles on surfaces below or above the area of such a surface.

If an area-selection procedure 160 has been performed, visualizing 180 the sensor data in the selected area comprises, for each tile that is located in the selection volume, projecting the visual attribute representing a sensor data value of a data point into the tile using the projection direction of the tile and the projection volume of the data point. Then, the tile can be displayed with the projected visual attribute, e.g., having the respective colour assigned to the value.

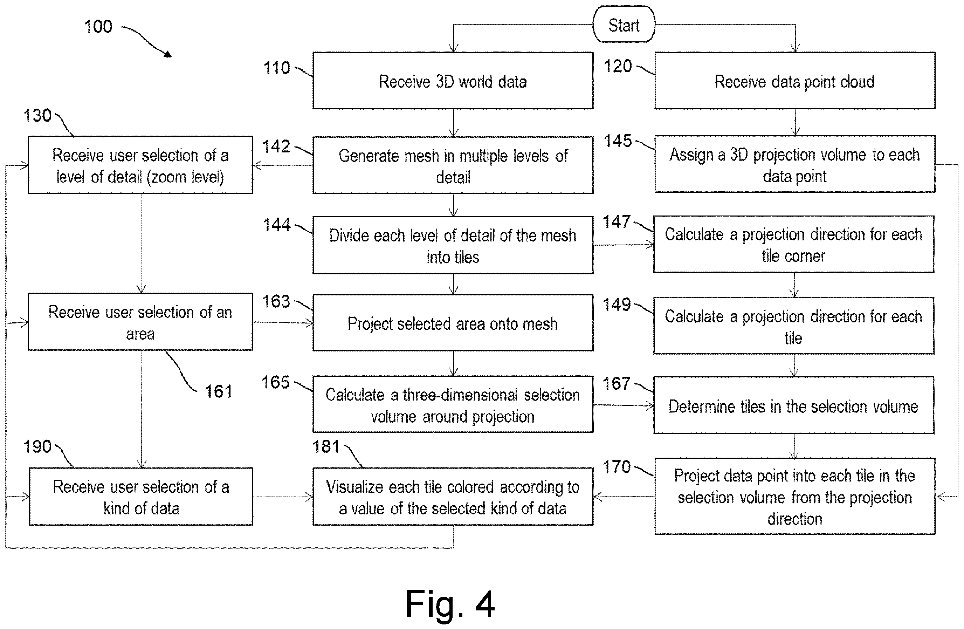

Figure 4 shows a flow chart illustrating a second exemplary embodiment of a method 100 according to the invention. The method 100 starts with receiving 3D world data related to a real-world terrain (step 110) and with receiving a data point cloud comprising real-world sensor data (step 120). The terrain data comprises information about the multiple surface layers of the 3D terrain. Each data point comprises 3D coordinates in relation to the terrain and one or more sensor data values. These values are to be visualized 180 in at least a part of the virtual representation of the terrain and at their correct position within the 3D terrain.

Based on the received 3D world data, 3D meshes are generated 142 for a multitude of different levels of detail (LOD). Each of the meshes is divided 143 into a multitude of tiles (e.g., as described with respect to Figures 2a-c). This division of the virtual world into tiles, for instance may comprise using a quad subdivision where the lowest LOD is one tile representing the whole world, and then four tiles on the next level, 16 tiles on the next level after this and so on. The size of the tiles thus depends on the LOD. The number of LODs depends on how dense the data-point shapes are. The aim should be to only hold a maximum of about one million data-point tiles in memory - and thus possibly being displayed at any given time or camera position. A user may select the LOD, e.g., by setting a zoom level, this selection is received 130 by the system and influences the size of the visualized tiles.

To each of the received data points of the data point cloud, a volume (3D projection volume) is assigned 145. The 3D projection volumes may overlap. This means that each projection volume, i.e., each volume a data point occupies, can be partly shared with one or more neighbour data points. This is different from the tile shapes, which preferably should not overlap. To each projection volume one or more visual attributes (e.g., colours) are assigned that are to be applied to the mesh. The visual attributes depend on values of the data-points, i.e., sensor values captured by the real-world sensors. The visual attributes for instance may comprise colours, shading, brightness values etc. For example, sensors might detect the presence of water, and the visual attributes applied to the mesh may comprise a blue colour for flooded areas.

The data-point shapes can be generated in multiple levels of detail independently of the detail levels of the virtual world.

Each tile comprises three or more corners that are shared with neighbour tiles. The number of corners usually exceeds the numbers of tiles. For each of the multitude of corners, a projection direction is calculated 147. Then, for each tile a projection direction is calculated 149 based on the projection directions of all corners of the tile, i.e., for each part of each tile, a projection direction is calculated 149 weighted by the distance from each corner of the tile. Each corner of a tile can be projected into different directions. However, since all corners are shared by neighbour tiles, also the projection direction of the shared corner is shared by the neighbour tiles. Corners projecting in different directions enable the 3D projection volumes to apply their visual attributes (e.g., colour) onto both a larger and a smaller area than the defined area of their shape. The 3D projection volume geometries can thus be of a different resolution than the virtual world representation. This allows constructing multiple LODs both for the data-shapes and the virtual world representation. Data-points must be produced from the LOD tiles. Systems using this will usually have a given resolution where each data point covers an area of a certain size in the world (i.e., a certain number of square meters). The tiles of the highest level of detail (highest-LOD tiles), which are the smallest tiles, must be populated with enough data points in order to get the correct data-point area coverage in the virtual world. The tiles of lower levels of detail (lower-LOD tiles) need to be populated with a larger area per data point, thus making each lower-LOD tile hold fewer data points. Data points do not need to follow the same resolution-change as the tiles do. Instead, data points can change their resolution faster or slower than the tiles. This can be adjusted in order to display more or fewer data points at any given time. Preferably, to achieve the best possible visual result, the data points should be populated in a square pattern with as even distance between them as possible.

Data points populated onto the tiles must generate their shapes, e.g. square or triangular shapes. Data points should be at the centre of the shape, and the corners of neighbour shapes must share positions. Corners sharing positions must also define a shared normal for the corner. The normal is a vector of direction (normalized), which is in a 90 degrees angle of the tangent of all the surfaces that the corner belongs to. This can be achieved by adding the normal from each triangle of the mesh that this corner is part of, and then dividing the result by number of triangles. The data-point-shape files need to be stored as a binary file together with the mesh tile it belongs to. The data format for the binary files is defined and use a versioning identifier so that the system can evolve into new types of shapes and still be backwards compatible in the runtime system.

All data points comprise an identifier (ID), which identifies the data point as a high-density data point or a lower-LOD data point.

The virtual world representation mesh and its LOD and tiles must be configured to say how they hang together with bounding volumes. Each tile inside the system needs to be populated with commands that the visual system can use to understand when to load data-point-shape files and when to display or remove them from display.

The runtime system running an application for performing the method 100 may have support for area selection of data points, e.g., based on the data point IDs. A user selection of an area may be received 161, whereby a selection area is defined in the virtual world representation, e.g., by projecting 163 the selected area onto the mesh. Based on the projection of the area on the mesh, a 3D volume (selection volume) is calculated 165, and a subset of tiles of the multitude of tiles is determined 167, which subset of tiles are located within this volume. The sensor data is then visualized only in these tiles. Since the virtual representation of the terrain is three-dimensional, the subset may include tiles on other surfaces than a surface selected by the user, e.g., tiles on surfaces below or above the area of such a surface.

For determining 167, which tiles lie in the selection volume, a query may be run to get an array of IDs that is covered by the area.

Visualizing the sensor data in the selected area comprises, for each tile that is located in the selection volume, projecting 170 the visual attribute representing a sensor data value of a data point into the tile using the projection direction of the tile and the projection volume of the data point. Then, the tile can be visualized 180 with the projected visual attribute, e.g., having the respective colour assigned to the value. Optionally, the user may select a kind of data to be visualized. Upon receiving 190 this selection, the tile is visualized 180 with the projected visual attribute according to the value of the selected kind of data.

The runtime system has support for applying visual attributes such as colours to the data-point-shapes by indexing the data point ID with a colour. Multiple shapes can be painted with unique colours through commands that the application can call. The runtime system can also use a similar call to remove visual attributes such as colour from the data-point-shapes.

The runtime system can also remove all attributes from all shapes in one call. The runtime system will only rasterize those shapes that have been assigned an attribute, e.g., have been painted with a colour. This part of the system is fully dynamic, meaning that it can be modified at any time.

The assigned 3D projection volume shapes and the virtual world representation do not need to be tied together tightly. However, the 3D projection volumes and the virtual world surfaces should intersect as close as possible to the centre of the 3D projection volume. There is in theory no limit to what format the virtual world representation is made in, but it is a requirement that the data-point system knows when the LOD changes are done while visualizing. The data-point system can therefore load and display the needed resolution of data. This loose connection between data-points and virtual world makes it easy to apply the data representation together with different world representation formats. This makes it a lower threshold for end-users to take the system into use. It will also make it easier for an existing end-user to change the format used to represent the virtual world.

Modern graphics accelerator hardware provides a simple way to execute the visualization of the data-point-shapes. The virtual world representation is rasterized onto a colour- and a depth-buffer, where each pixel that will be displayed on screen is represented with a red, green and blue colour component together with a depth of high resolution. The data-point-shapes reads the depth-buffer and use the two-dimensional buffer coordinate of each pixel to recreate the pixels three-dimensional world position. The pixels world position is now the target for the light-projections done by the array of data-point-shapes, and the shape that is closest to hit the pixel with its projection will be allowed to write its colour onto the pixel. The colour writing can be a full overwrite or a blend where parts of the existing pixel-colour is still visible. The new colour is written into a different colour-buffer, in order to allow multiple layers of data-point-shapes to overwrite each other. The result colours will be written over the colour-buffer generated by the rasterization of the virtual world representation. This colour-buffer can therefore be used for additional post-processing effects before the results is displayed on screen. Multiple layers of data-point-shapes can exist when the system is in a transition between two layers of detail. The system is set up with an order of draw that makes the highest resolution data-point-shapes to overwrite the lower resolution shapes.

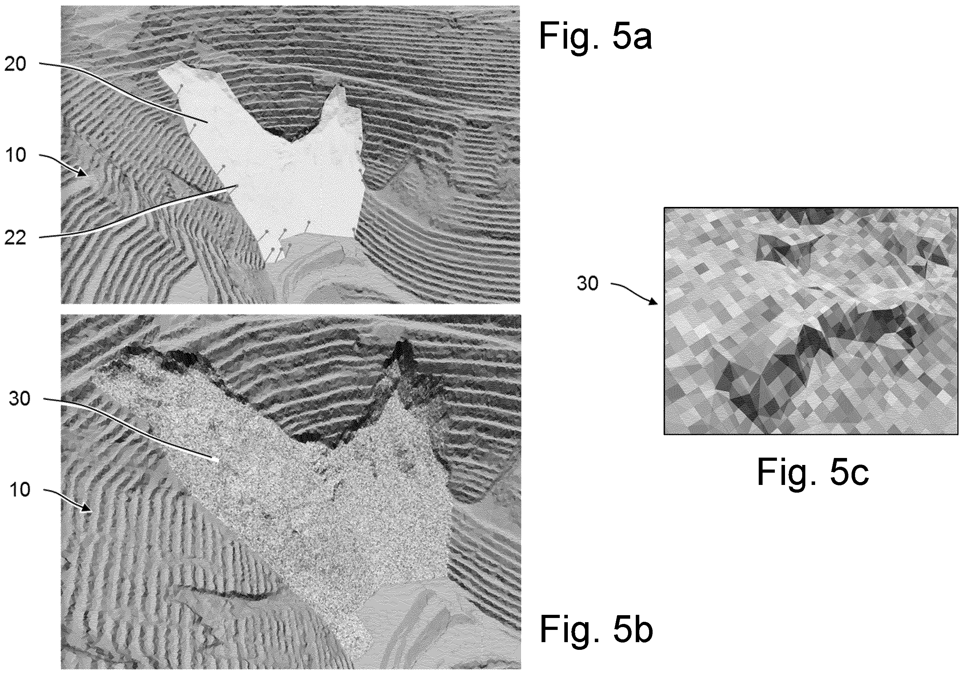

Figures 5a-c illustrate a selection of an area 20 in the mesh 10 by an operator. In Figure 5a, the user has selected the highlighted area 20 by marking its contour on a surface of the mesh 10. This marking may be performed using conventional input means such as a mouse or a touchscreen. Corners of the contour are marked by pins 21. Optionally, these pins 21 may be set and moved individually to change the contour of the area 20. In Figure 5b, a multitude of tiles that lie in the selected area 20 of Figure 5a are displayed, so that the divisions 30 of the mesh 10 into tiles becomes visible. This division 30 into tiles is shown in more detail in Figure 3c, where a section of the selected area 20 of the mesh 10 is shown, the mesh comprising an overhang as a 3D feature.

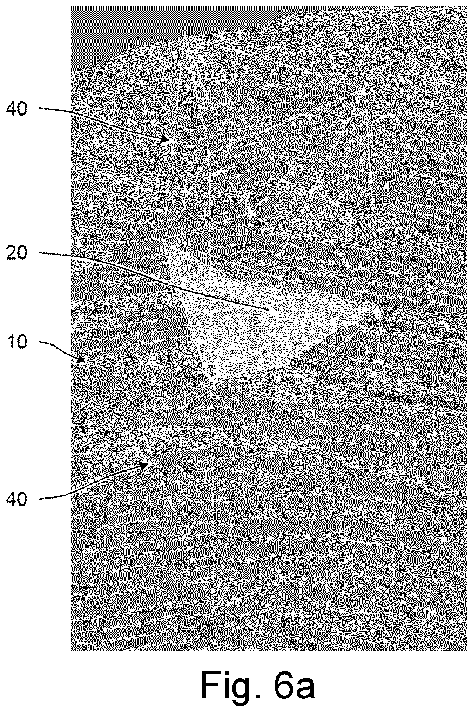

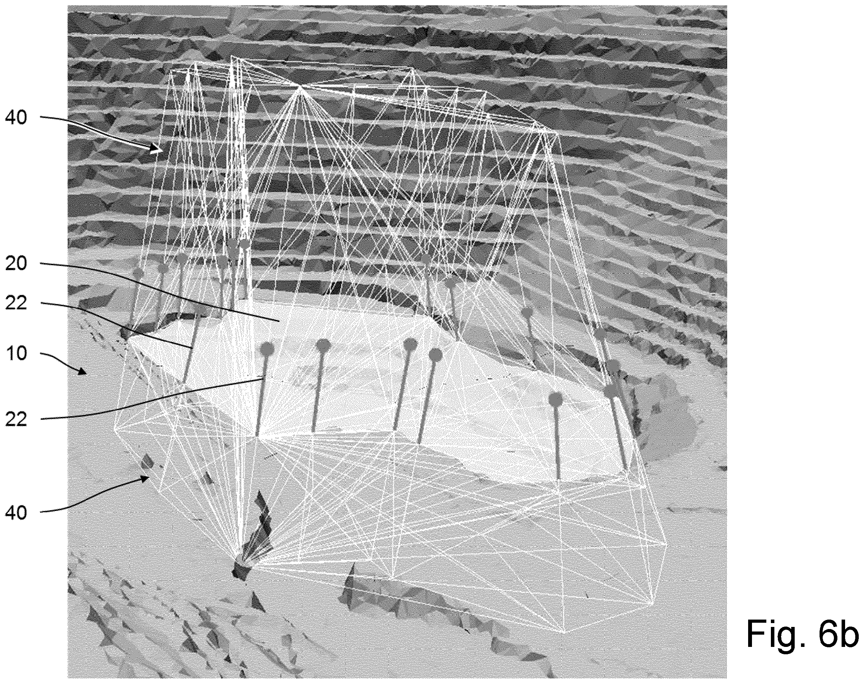

Figures 6a and 6b show a selection volume 40 being generated based on a selected area 20. In Figure 6a, the selected area 20 is a triangle, i.e., a very simple shape. In Figure 6b, the selected area 20 comprises a multitude of corners (each corner being indicated by a pin 22). In both cases, the shape of the selected area 20 is projected on the mesh 10, and the selection volume 40, which extends above and below the area 20, is calculated based on the projection. The boundaries of the selection volume 40, which are shown here as thin white lines, lie both in front of (above) and behind (beneath) the shown mesh 10. The selection volume 40 allows including tiles on surfaces that lie above or below the surface of the 3D mesh onto which the selected area 20 is projected. Thus, the sensor data can be visualized in the representation of the terrain in true 3D.

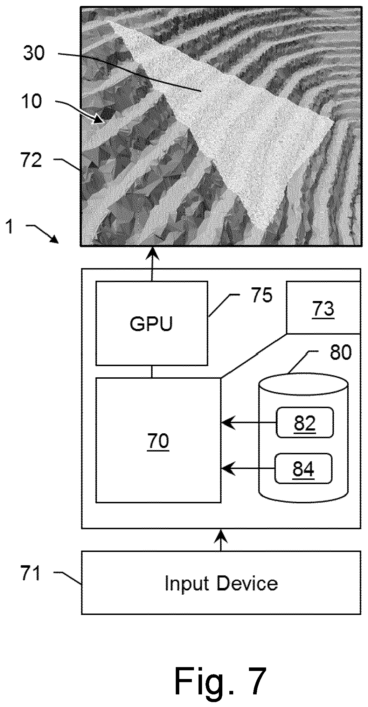

Figure 7 shows an exemplary computer system 1 according to the invention. It is configured to carry out embodiments of the method according to the invention for visualizing sensor data in a three-dimensional virtual representation of a terrain, i.e., using a distribution 30 of tiles in a 3D mesh 10 to visualize the sensor data on a display device 72.

The computer system 1 may comprise a mainboard 70 which includes circuitry for powering and interfacing to at least one on-board processor (not shown here) that may comprise two or more discrete processors or processors with multiple processing cores. The main board 70 may act as an interface between a microprocessor and a memory device 80 of the computer system 1. The memory device 80 may comprise one or more optical, magnetic or solid-state drives and may store instructions for an operating system and other software of the computer system 1. The main board 70 may also communicate with random access memory (RAM) and read only memory (ROM) of the computer system 1, the ROM typically storing instructions for a Basic Input Output System (BIOS) which the microprocessor may access, and which preps the microprocessor for loading of the operating system.

The main board 70 also interfaces with a graphics processor unit (GPU) 75. In some systems the GPU 75 may be integrated into the main board 70. The main board 70 may be connected to a communications adapter 73, for example comprising a LAN adapter or a modem, that places the computer system 1 in data communication with a computer network such as the internet.

A user of the computer system 1 interfaces with it by means of one or more input devices 71, such as a keyboard or a mouse, and one or more display devices 72. For instance, the user may use the input devices 71 to navigate a virtual camera through the 3D representation of the terrain, to select a zoom level, to select an area of the mesh in which data is to be visualized, or to select a kind of data to be visualized.

It will be understood that the computer system 1 comprises an exemplary electronic processor-based system for carrying out the method. However, the method may also be performed with other electronic processor-based systems. Such systems may include tablet, laptop and netbook computational devices, cellular smart phones, gaming consoles and other imaging equipment, e.g., medical imaging equipment. In particular, the shown computer system 1 may also comprise or be embodied as a handheld device, such as a smartphone, comprising a touch-sensitive display (touchscreen) which serves both as display device 72 and as input device 71.

The user of the system 1 may operate the operating system to load a computer-graphics-related software product which may be provided by means of download from the internet or as tangible instructions borne upon a computer readable medium such as an optical disk. The computer graphics related software product includes data structures that store data defining various scenes or allowing to define various scenes, the data comprising at least terrain data 82 and a point cloud 84 of sensor data. The software product also includes instructions for the GPU 75 to manipulate the scene data in response to inputs received from the user via input device 71.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for visualizing sensor data in a three-dimensional virtual representation of a terrain that has multiple surface layers, the method comprising, in a computer system (1),
- receiving (110) terrain data (82) comprising information about the multiple surface layers;
- receiving (120) at least one point cloud (84) comprising a multitude of data points, each data point comprising three-dimensional coordinates in relation to the terrain and one or more sensor data values;
- performing a pre-processing procedure (140); and
- visualizing (180) the sensor data in at least a part of the virtual representation of the terrain,
**characterized in that**
the pre-processing procedure (140) comprises
- generating (141) a three-dimensional mesh (10) as the virtual representation based on the terrain data;
- dividing (143) the mesh (10) into a multitude of tiles (31), each tile having at least three corners, each of the corners being shared with one or more neighbour tiles;
- calculating (147) a projection direction for each tile corner; and
- calculating (149) a projection direction for each tile based on the projection directions of the tile's corners,
wherein visualizing (180) the sensor data comprises, for each tile (31) in the part of the virtual representation of the terrain,
- projecting (170) a visual attribute representing a sensor data value of one of the data points into the tile (31), wherein the projection direction of the tile and a three-dimensional projection volume of the respective data point are used for projecting the visual attribute into the tile (31); and
- displaying the tile (31) having the projected visual attribute.

2. Method (100) according to claim 1, comprising assigning (145) a three-dimensional projection volume to each data point, particularly wherein the projection volumes are assigned so that
- each projection volume has a same size and shape;
- neighbouring projection volumes overlap; and/or
- the three-dimensional mesh (10) intersects each projection volume, particularly at or near a centre of the respective projection volume.

3. Method (100) according to claim 1 or claim 2, wherein one or more visual attributes are assigned to each projection volume, each visual attribute representing a sensor data value of the respective data point, particularly wherein projecting (170) the visual attribute into the tile (31) comprises projecting at least one of the one or more visual attributes that are assigned to that projection volume that is positioned in or most closely to the projection direction of the tile.

4. Method (100) according to any one of the preceding claims, comprising an area-selection procedure (160) for selecting the part of the virtual representation of the terrain in which the sensor data is to be visualized, the area-selection procedure comprising
- receiving (161) a user selection of an area (20) of the mesh (10);
- projecting (163) the selected area (20) on the mesh (10);
- calculating (165) a three-dimensional selection volume (40) based on the projection of the area (20); and
- determining (167) which tiles (31) are located in the selection volume (40),
wherein visualizing (180) the sensor data is performed for each tile (31) that is located in the selection volume (40),
particularly wherein the three-dimensional selection volume (40) extends above and below the projection of the area (20) on the mesh (10), and tiles (31) on at least two surface layers are positioned in the selection volume (40).

5. Method (100) according to any one of the preceding claims, wherein
- generating (141) the mesh (10) comprises generating (142) a mesh in multiple levels of detail;
- dividing (143) the mesh into tiles (31) comprises dividing (144) the mesh differently in each level of detail; and
- the method comprises receiving (130) a user selection of a level of detail,
particularly wherein
- the higher the level of detail, the higher is the number of tiles (31) into which the mesh (10) is divided (144);
- the number of data points exceeds the number of tiles (31) in each level of detail; and/or
- the user selection of a level of detail comprises a selection of a zoom level.

6. Method (100) according to any one of the preceding claims, wherein
- the at least one point cloud comprises data points comprising sensor data values generated by a plurality of different sensor kinds;
- the method comprises receiving (170) a user selection of a sensor kind; and
- the tile (31) is displayed according to a sensor data value of the projected data point generated by the selected sensor kind,
particularly wherein
- at least a subset of data point comprises sensor data values of a plurality of different sensor kinds;
- the different sensor kinds measure different spectrums of real surfaces in the terrain.

7. Method (100) according to any one of the preceding claims, wherein the data points comprise a significance value, and projecting (169) the visual attribute is based on the significance value, particularly wherein the significance value
- determines a visibility level of the projected visual attribute; and/or
- is dependent on a quality or reliability of the sensor data value.

8. Method (100) according to any one of the preceding claims, wherein the data points comprise sensor data values generated by multiple real-world sensors in the terrain, particularly wherein
- the multiple real-world sensors comprise a grid of radar sensors;
- the method comprises capturing the at least one point cloud using the multiple real-world sensors; and/or
- the at least one point cloud comprises at least five million data points, particularly at least twenty million data points.

9. Method (100) according to any one of the preceding claims, wherein the visual attribute
- comprises a true colour of the surface, and/or
- comprises a false colour representing a data value.

10. Method (100) according to any one of the preceding claims, wherein the mesh (10)
- is divided (143) into tiles (31) so that the tiles do not overlap, particularly wherein the tiles (31) comprise triangles and rectangles or are cells of a Voronoi diagram (30'); and/or
- is composed of a plurality of triangles, wherein at least a subset of tiles (31) covers at least two of the triangles at least partially.

11. Method (100) according to any one of the preceding claims, wherein the multiple surface layers
- have multiple surface points at identical horizontal coordinates; and/or
- are effected by natural or man-made structures in the terrain, particularly wherein the structures comprise at least one of caves, tunnels, overhangs and buildings.

12. Method (100) according to any one of the preceding claims, wherein the method is performed in real time by a handheld computing device, the sensor data being visualized (180) on a display of the handheld computing device, particularly wherein the handheld computing device is a smartphone or tablet computer and/or the display is touchscreen.

13. Computer system (1) comprising a data storage (80), a graphics processing unit (75), input means (71) and a display (72),
**characterized in that**
the computer system (1) is configured for performing the method (100) according to any one of the preceding claims.

14. Computer system (1) according to claim 13, being embodied as a handheld computing device having a touchscreen, the sensor data being visualized (180) on the touchscreen,
particularly wherein the handheld computing device is a smartphone or a tablet computer.

15. Computer program product comprising program code, which is stored on a machine-readable medium, or being embodied by an electromagnetic wave comprising a program code segment, and having computer-executable instructions for performing, in particular when run on a computer system (1) according to claims 13 or 14, the method (100) according to any one of claims 1 to 12.
